(19) **Europäisches Patentamt / European Patent Office / Office européen des brevets**

(11) **EP 1 766 196 B1**

(12) **EUROPEAN PATENT SPECIFICATION**

(45) Date of publication and mention
of the grant of the patent:
**29.05.2013 Bulletin 2013/22**

(51) Int Cl.:
*F01K 17/02* (2006.01)    *F24D 3/02* (2006.01)
*F24D 5/02* (2006.01)    *F24D 9/00* (2006.01)

(21) Application number: **05750266.8**

(22) Date of filing: **30.05.2005**

(86) International application number:
**PCT/IT2005/000308**

(87) International publication number:
**WO 2005/119014 (15.12.2005 Gazette 2005/50)**

(54) **REMOTE-HEATING PLANT FOR URBAN, CIVIL, INDUSTRIAL AND AGRICULTURAL APPLICATIONS**

FERNHEIZANLAGE FÜR STÄDTISCHE, INDUSTRIELLE, LANDWIRTSCHAFTLICHE UND WOHNHAUS-ANWENDUNGEN

INSTALLATION DE CHAUFFAGE A DISTANCE POUR DES APPLICATIONS URBAINES, CIVILES, INDUSTRIELLES ET AGRICOLES

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **03.06.2004 IT RM20040027**

(43) Date of publication of application:
**28.03.2007 Bulletin 2007/13**

(73) Proprietor: **Agridea Patents Ltd.**
**RATHGAR DUBLIN 6 (IE)**

(72) Inventor: **CICCOLELLA, Vincenzo**
**I-70056 Molfetta (BA) (IT)**

(74) Representative: **Fiammenghi-Domenighetti, Delfina et al**
**Fiammenghi-Fiammenghi**
**Via Quattro Fontane 31**
**00184 Roma (IT)**

(56) References cited:
**WO-A-01/55561        US-A- 4 010 378**
**US-A1- 2003 029 169    US-B1- 6 244 035**

**Description**

Technical Field

The present invention generally relates to a plant used to exploit low-temperature thermal energy extracted from a thermoelectric power plant, for the purpose of performing the remote heating of the interior of buildings, e.g. for civil, industrial or agricultural use (for instance hothouses or greenhouses). The invention is applicable to thermoelectric power plants equipped with a steam turbine.

Background Art

Plants and thermoelectric power plants used for the joint production (co-generation) of electric energy and heat are already known in the art.

The aforesaid plants usually consist of internal combustion engines (motor driven generators) with an electric efficiency lower than plants equipped with a steam turbine; therefore, the so obtained thermal energy cannot be classified as "low temperature energy" when compared to the same energy produced by a turbine. On the other hand, if the "extraction turbine technique" is used in a thermoelectric power plant, the electric efficiency is lowered once again and an increase in thermal energy is thereby obtained which cannot be described any more as "thermal waste". According to the Italian law (Legislative decree, March 16 1999, No. 79, of the authority for the electric energy and gas delivery, No. 42, March 19, 2002, and Law No. 239, August 23, 2004) the following parameters (equations) need to be satisfied for the construction of an efficient plant for joint production of electric energy and heat:

$$IRE = 1 - \frac{Ec}{\dfrac{Ee}{\eta_{es} \cdot p} + \dfrac{Et_{civ}}{\eta_{ts.civ}} + \dfrac{Et_{ind}}{\eta_{ts.ind}}} \qquad LT = \frac{Et}{Ee + Et}$$

An object of the present invention is to realise a remote heating plant for urban, civil, industrial and agricultural use, whose main innovative feature is the exploitation, according to the method described hereafter, of low-temperature warm water, say water at 30-35° C, derived from the heat of steam under pressure coming from the steam turbine of a thermoelectric power plant. The plant obtained in this manner may be configured as a plant for the joint production of electric energy and heat, through co-generation, depending on the amount of exploited thermal energy (heat), and with the fulfilment of the previous equations.

A more specific object of the present invention concerns the remote heating of greenhouses or hothouses, effected by means of said warm water having a relatively low temperature and coming from the thermoelectric steam power plant, wherein said warm water acts as a carrier fluid.

Document WO 01/55561 A1 discloses a small-scale cogeneration system for producing heat and electrical power, which according to Fig. 1 of that document includes a heater, for heating water (using a fuel and a burner), and an expander, for generating electric energy from the thus obtained high-pressure hot working fluid. Downstream of the expander there is:

- a blower, coupled to a condenser through which the fluid (water and steam) exiting the expander flows to be air-cooled; the heated air, from the blower, is here directly used to heat rooms. The cooled fluid (water) is returned to the heater by a pump and a return duct.
- a parallel circuit (that branches off downstream of the expander), which is used to heat a domestic supply of water with a portion of the hot water and steam exiting the expander.

This cogeneration system directly uses the air from the blower, in order to heat rooms of a civil habitation. The invention described in WO 01/55561 A1 (see page 3, line 19) relates to a small-scale, space-heating and electrical power co-generation system that is most advantageously used in homes and small commercial buildings.

Due to the similarity in the general operation principle, the system disclosed by WO 01/55561 A1 is considered relevant for the preamble of claim 1.

Disclosure of Invention

To understand the present invention it is necessary to briefly and schematically describe the cycle of a conventional thermoelectric power plant.

The steam generated inside the steam boiler through the combustion of any kind of fuel, either renewable or not, is sent to the turbine which - due to the high pressure - transforms the thermal energy into mechanical and/or electric energy. The low-pressure and low-temperature steam downstream of the turbine is condensed, and the resulting water, after its cooling, is again pumped into the steam boiler tubing, thereby ending the cycle. In the cooling circuit, the condensation of the steam requires great amounts of water, and the latter needs to be re-circulated by the cooling towers which disperse in the surroundings the residual heat. According to the known art, when energy is extracted from such a cycle one performs a so-called "turbine bleeding", that is, one draws from the turbine high-pressure and high-temperature steam which is still capable of performing useful work, transformable into mechanical and/or electrical energy; however, this results in a reduction of the electric efficiency of the plant. The present inventive concept consists in the exploitation of the thermal energy that flows out of the low-pressure section of the steam turbine, instead of performing the turbine bleeding ('extraction turbine' technique), in order to effect the above mentioned remote heating of a block of owner-occupied flats, of greenhouses (hothouses), etc., or the remote heating in the industry sector ; it is also of fundamental importance to emphasise the fact that the heat which is utilised in this manner forms that part of the energy which is produced by any power plant at the end of its production cycle (and which for this reason is called waste heat) and which normally is dispersed in the surroundings due to lack of means capable of exploiting the same.

With regard to this, it is important to highlight the possibility of fulfilling, by means of the present invention, the conditions concerning the index of primary energy saving (IRE; Indice Risparmio Energia primaria) and the thermal limit (LT; Limite Termico) in accordance with the above mentioned Italian law.

The invention, according to the features contained in claim 1 of the present patent application, intends to extract said waste heat using a heat exchanger in the form of a water-cooled condenser which is arranged in parallel to an air condenser of the power plant (the latter condenser is commonly employed by the known technology). In practice, the condensate of the steam coming from the turbine discharge section transfers its remnant heat or waste heat, by means of the aforementioned heat exchanger, to a secondary fluid (normally water), which acts as a "carrier" to perform the remote heating.

Usually, to quote an illustrative and non-binding example, said secondary fluid will have a temperature in the interval from 30 to 35 Celsius degrees (°C) and it will return to the power plant (to the water-cooled heat exchanger) with a temperature between 27 and 30°C.

The advantages of the present invention will be illustrated, without loss of generality, referring in particular to two different types of remote heating, that is, to:

solution 1): remote heating plant of a distributed kind, according to which for each power consumption unit there is provided a temperature increasing system (boiler,
heat pump) for heating the secondary fluid, wherein said system is part of the (local) heating plant of the power consumption unit;
solution 2): centralised plant, in which a temperature increasing system is comprised in the centralised network which serves different power consumption units.

Moreover, only for illustrative purposes, a specific remote-heating plant for greenhouses or hothouses will be described, said plant including:

a partition unit for subdividing the low-pressure steam current flowing out of said turbine and thereby feeding a first and a second fraction of low-pressure steam;
a first hydraulic circuit which is fed with said first fraction of steam from said partition unit, and including

- an air condenser, used to cool and condense said first steam fraction,
- a first condensate tank which receives the condensate from said air condenser, and
- a first pumping station for taking out the condensate from said first condensate tank;

a second hydraulic circuit which is fed by said second steam fraction from said partition unit, wherein said first and second hydraulic circuits are arranged in parallel, and said second hydraulic circuit includes

- a water-cooled condenser used to cool and condense said second fraction of low-pressure steam,
- a second condensate tank for collecting the condensate from said water-cooled condenser, and
- a second pumping station for taking the condensate out of said second condensate tank;
- a return duct that receives the condensate from said first and second pumping station and pours it in said first condensate tank;

a third hydraulic circuit, including a first branch for carrying out the main distribution, passing through said water-cooled condenser in order to heat the water used in the remote heating; radiator tubes for the secondary distribution of the remote heating, which are located inside said greenhouses/hothouses and are used to circulate the warm water needed for the remote heating; a second branch or delivery branch of the main distribution, extending to the greenhouses/ hothouses, starting from the water-cooled condenser outlet and connected to said radiator tubes; and a third branch or return branch, returning to the greenhouses/hothouses and making part of the main distribution, connecting the outlet of said radiator tubes with the inlet of said water-cooled condenser; and a third pumping station for circulating the water, used in the remote heating, inside the third circuit; and

a control device for controlling said main distribution and said secondary distribution of said greenhouses/hothouses.

In this case too, a solution consists in using, as thermal energy source, a portion of the steam flowing out of the low-pressure section of the steam turbine, instead of performing the bleeding (drawing) of the steam, which could still deliver useful mechanical work transformable in electric power inside the power plant.

Also in this method the problem is solved by means of the already mentioned heat exchanger, which actually forms a water-cooled condenser arranged in parallel with the air condenser of the power plant. The air condenser is already available in a power plant (thus it is already included in the background art), since it is used to dissipate the thermal energy which must in any case be dissipated by the power plant in order to perform its own operation cycle for the production of electricity.

The thermal plant located inside a greenhouse will transfer this thermal power to the greenhouse inner rooms by means of radiant tubes and/or radiant panels, convectors with fans having a low rpm, and assemblies of outer (perimetrical) fins.

It is well-known that the cultivation inside greenhouses or hothouses requires certain amounts of heat for heating vast areas and that this involves a production cost since the relative fuel must be purchased. Thus, the present invention allows, also in case of greenhouses, to exploit this low-temperature waste heat which is of limited value and which is derived from thermoelectric power plants equipped with a steam turbine. The present invention however uses a unit (30) to further increase the temperature of the carrier fluid (see claim 1).

Brief Description of Drawings

The invention will now be described in detail with reference to the attached drawings and its various embodiments, wherein:

Fig. 1 is a comprehensive view of an example, concerning a direct-type remote heating plant (usable in greenhouses) and associated with an electric power plant equipped with a steam turbine;

Fig. 2 is a detailed, enlarged view, of the very part involved in the remote heating;

Fig. 3 is a very schematic view showing different solutions in order to perform the remote heating of domestic rooms, public rooms, industrial buildings, greenhouses, or other rooms, two of them being in accordance with the present invention.

Detailed Description of Some Embodiments

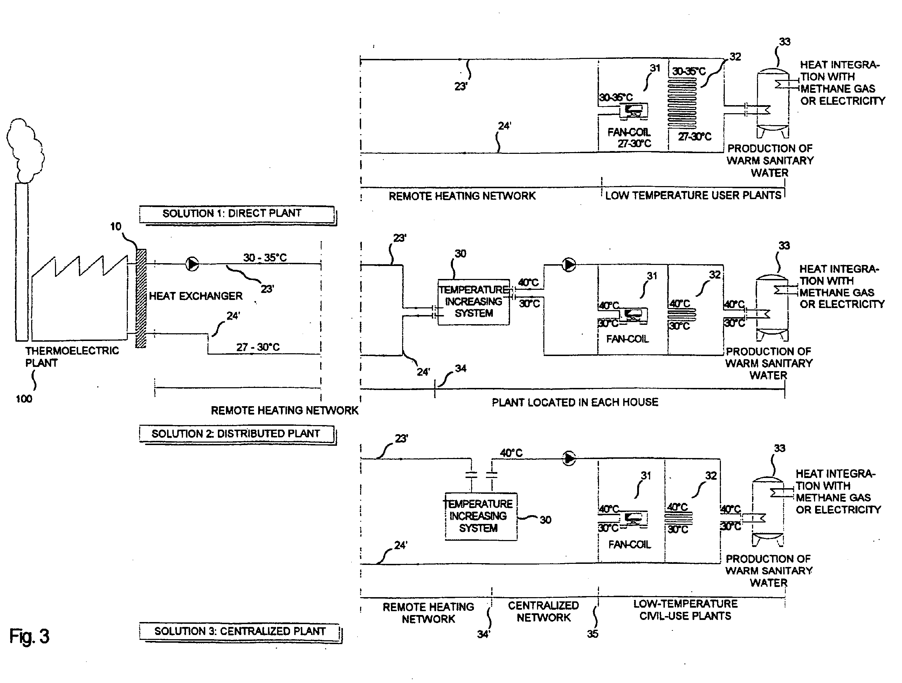

In order to illustrate the invention in all its details but without limiting its generality, a plant will first be described which is used to perform the remote heating of greenhouses or hothouses. However, in practice this plant is usable - provided certain modifications are made - also in the case of the solutions that will be described below with reference to Fig. 3 (heating of any kind of room). According to the invention, a temperature increasing unit such as boilers or heat pumps need to be provided as temperature increasing systems for increasing the temperature of the carrier fluid or of a secondary fluid, and these means will be located upstream of the very units where power consumption takes place (see claim 1).

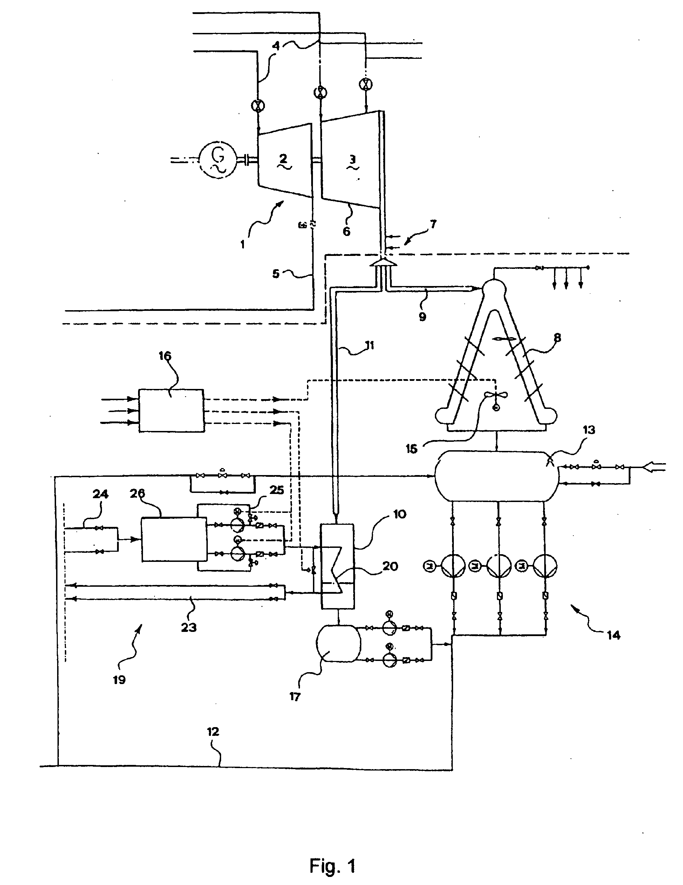

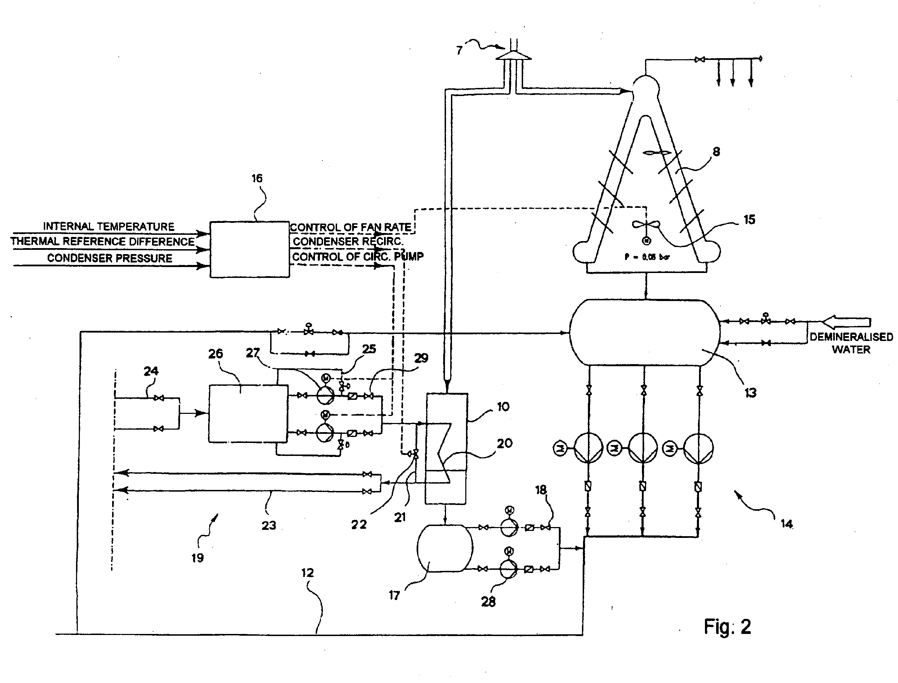

Turning again our attention to Figs. 1 and 2, in Fig. 1 there is shown a steam turbine 1 including a first stage 2 and a second stage 3, and which drives an electric generator G. Numeral 4 schematically indicates the steam ducts for injecting the steam in the turbine, while numeral 5 denotes the outlet for the medium-pressure steam coming out of the first stage. The outlet 6 from the second stage sends the low-pressure steam to a partition unit 7 which subdivides the steam among an air condenser 8, associated to a first hydraulic circuit 9, and a water-cooled condenser 10 belonging to a second hydraulic circuit 11.

The air condenser 8 is a commonplace element in a thermoelectric power plant and it is usually employed for dissipating the waste heat consisting of the sensible and latent heat of the steam flowing out of the turbine.

On the other hand, the water-cooled condenser 10 and the second hydraulic circuit 11 are part of the characterising features of the present invention.

The hydraulic circuits 9 and 11 are arranged in parallel and starting from the partition unit 7 they join again to form a single duct 12 used to re-circulate the condensate and serving for the general water and steam cycle of the power plant.

The first hydraulic circuit 9 comprises the already mentioned air condenser 8, a first condensate tank 13, and a first pumping station 14.

The air condenser 8 is provided with fans 15 whose velocity is controlled by a control device 16 in order to adjust the cooling rate of the steam and therefore the water condensate flow rate towards the first tank 13 of the condensate. The condensate is at low pressure and the first pumping station 14 provides for the recirculation of the water to the system.

The second hydraulic circuit 11 includes the water-operated (water-cooled) condenser 10, a condensate tank 17, and a second pumping station18 which extracts the water condensate and sends it to the recirculation duct 12.

A third hydraulic circuit 19 making up the very remote-heating section, includes a first branch 20 which passes through the water-cooled condenser 10 and which cools the fluid (steam) coming from the second hydraulic circuit 11, causing the condensation of said fluid (steam). A bypass duct 21 is provided with a valve 22 controlled by the control device 16 in order to adjust the quantity of cooling water passing through the first branch 20, and therefore the amount of extracted heat used for the remote heating operation. The third hydraulic circuit 19 further includes a second branch, or delivery branch 23, used for the main distribution to the greenhouses of the heating water, and a third branch 24 of the main distribution, used for returning cool water towards the water-cooled condenser 10.

In the third branch 24 of the third hydraulic circuit 19 there is provided a third pumping station 25 which preferably picks up the water coming from the third branch 24, from an accumulation basin 26 that also serves as gunbarrel for the third hydraulic circuit 19.

The basin is preferably located underground and is made of reinforced concrete. Since a water leakage is not to be expected in the circuits (except when failures occur), the basin and circuits are refilled only now and then.

The recirculation pumps 27 of the third station 25 draw the water from the basin 26 in order to send it to the condenser 10, and from there, to the delivery tubing 23 that reaches the greenhouses.

At least one pump will have a variable velocity (rate) in order to be able to adjust the flow rate between 10 and 100%. The power of the pumps will mainly be a function of the losses occurring within the heat exchanger and within the delivery and return tubing, towards the greenhouses and back. Assuming a circulation velocity of the water in the ducts equal to 2 - 2.5 m/s, one may derive therefrom the diameter of the ducts (tubing), starting from the power which is to be dissipated and from the temperature difference between the delivery and return branches, which is about 7 - 7.5°C.

Obviously, bypass ducts for the pumps are provided for safety reasons and for managing the circuit emptying phase. The valves insure the operation of the circuits - "around" the pumps - as recirculating circuits, thereby insuring a further regulation of the water flow rate to be sent to the greenhouses.

To carry out the control of the remote heating operation, the control device 16 receives - from appropriate sensors - the greenhouse's indoor temperature value, the thermal reference difference (temperature difference) with respect to the water temperature in the first branch 20, at the condenser 10, and the pressure of the condenser itself, and based on the foregoing parameters it controls the velocity of the fans 15 of the air condenser 8 and the warm water flow rate inside the third hydraulic circuit 19 by controlling the valve 22 of the bypass duct 21 and the rate of the circulation pumps 27 of the third pumping station 25.

The thermal plant located inside the greenhouse will transmit this power to the greenhouse's rooms by means of radiant tubes located on the floor which could be associated to convectors with fans, along the perimetrical walls of the greenhouse and its corridors.

At this point some remarks will be made on the operation of the present invention.

The water of the main distribution is delivered to the greenhouses by means of an "injection system". Each greenhouse body is provided with a secondary distribution, with the tubing bundles - which surround each flower bench row - arranged in parallel, and with a circulator which serves to overcome the resistance of the greenhouse body itself. Two ducts which are respectively connected to the delivery branch and the return branch of the principal water distribution, allow the inflow of warm water and the outflow of an equal amount of cooled water. By acting on corresponding valves it is possible to isolate the secondary distribution system from the main distribution, when it is not required to draw warm water from the latter. The load loss occurring in the tubing between the main distribution system and the secondary distribution system, and in their respective valves, must be less than the loss along the main distribution that would permit the bypassing of any greenhouse's body, for the very purpose of allowing the water to "enter" in the circuit of the greenhouse's body.

The main distribution, and the secondary one, in each greenhouse body, may also be designed independently from each other under the viewpoint of the control. This solution would allow to keep the control systems of the main distribution separated from those of the greenhouse bodies, and to install the former in the power plant, by integrating them with the control system of the latter; moreover, this solution allows to connect more than one power consumption unit to the main distribution system, and at the same time these units could be independent of each other.

In any case, for reasons of safety, it would be advisable to realise the control systems of the main distribution and the general control system of the various greenhouse bodies, in such a way that they can "dialogue" with each other.

The control device 16 of the main distribution, which is provided in the control system of the power plant, has the following controlled output variables:

- the rate of the circulation pumps 27 which are associated with the third pumping station 25;
- the control of the re-circulation valves 29;
- the variation of the velocity of the fans 15;
- the control of the bypass valve 22 of the water-cooled condenser.

Moreover, the distribution system must be coordinated to obtain an optimum void at the condenser and a temperature difference of the water equal to 7°C.

The thermal power will be delivered to the water-cooled condenser by reducing the air flow to the air condenser, which will consequently dissipate less power.

Therefore, the modulation of the cooling capacity of the two condensers will require the control of the thermal load and of the water temperature. By using an adequate software, this will be achieved by controlling the rounds per minute of the motor of the pumps 27 used for the circulating water and by controlling the fans 15 of the air condenser. Normally, a minimum water flow rate will be circulated in the loop of the main distribution, by switching the bypass valve 22 of the water-cooled condenser to the open position (exclusion of the condenser).

When some greenhouse body needs warm water and "pours in" cold water in the return duct 24 of the hydraulic circuit 19, and when the temperature in the return branch is approaching a minimum value which is assumed to correspond to the desired temperature for the water to enter the heat exchanger 10, the bypass valve 22 will be closed and the water in the main distribution will start to be warmed inside the water-cooled condenser 10.

At the same time the flow rate of the steam directed to the condenser 10 will be increased in order to insure that at the outlet of the latter the temperature of the warm water corresponds to the design value (for instance 37°C).

If, due to an excessive amount of warm water drawn by the greenhouses, the temperature on the return branch tends to deviate from said minimum value, the pumping station 25 will increase the flow rate of the water circulating in the principal distribution system, and at the same time the flow rate of the steam sent to the heat exchanger 10 will also be increased.

To insure a quick response of the system to the needs of the greenhouses, considering the noticeable inertia of the system as a whole and the rather low temperature interval between the return and delivery branches which corresponds to the greenhouse's demands, it is necessary that the temperature on the return branch (section from 26 to 10) be always maintained above 30°C.

Although the plant which is schematically illustrated in the figures is not optimised under this point of view, this result will nonetheless be easily achieved by the use of the accumulation basin, with the proviso that the ratio of the volume of this basin to that of the entire main network is not too low.

Alternatively, one may act on the control system of the secondary distribution for the greenhouse bodies, so that it is able to greatly anticipate the temperature decrease inside the greenhouse itself.

The control system of the secondary distribution (inside the greenhouse) will in turn detect the variation of the temperature of the indoor air, and if this temperature rapidly approaches the design value (18°C) it will activate the fixed velocity air circulation systems.

If the water temperature becomes less than a minimum value established during the design (30°), the control system will open the valves on the connection tubing with the main distribution system and water is exchanged with the latter system; in the opposite instance the secondary distribution will function according to a 'closed cycle' until the heat dispersions in the greenhouse will lead to an adequate cooling of the water.

The invention has been described in a general manner and according to its variants and realisation possibilities. It is intended that obvious variants and modifications to the inventive concept are included in the scope and spirit of the same invention.

The present invention, as has been repeatedly said above, is not only applicable to the remote heating of greenhouses; instead, the preceding detailed description may be taken as an example in order to generalise the present inventive concept, as exemplified by Fig. 3. In other words, the example shown in Figs. 1 and 2 must be considered only as a teaching which is useful for the technician in this field in order to put into practice the present inventive concept in all its details.

Therefore, referring now to Fig. 3, numeral 100 indicates a thermoelectric power plant which functions in the manner as substantially described in Fig. 1 and 2, that is, with an air heat exchanger (air condenser) (not shown in Fig. 3) and with a water heat exchanger 10, which are mounted in parallel.

The remote heating plant comprises a delivery branch 23', extending from the water-cooled condenser 10 to the indoor rooms to be heated, and a return branch 24' which extends back to the water-cooled condenser 10 itself. These features are indicated on the left in Fig. 3 since they are applicable to all solutions to be described next.

On the right, upper side of Fig. 3, there is shown the direct heating typology, according to which the carrier fluid (usually water) directly feeds a heating plant provided with valves, air circulation devices, radiator tubes, this typology being applicable to any kind of indoor space. This direct typology is not part of the invention.

On the right, central part of Fig. 3, there is shown a remote heating plant of the distributed kind, wherein, for example, in the individual civil habitation the carrier fluid, by means of a heat pump or a boiler 30, increases the temperature of a further fluid up to about 40°C, thereby feeding both a traditional heating plant with fan coils 31 (modified with fans having a low rpm to slowly move the warm air), and an indoor system of heat exchange plates at least doubled with respect to traditional plants which use a carrier fluid at high temperature (to increase the heat exchange surface), or alternatively a heating system with radiator tubes/radiator panels 32 located on the floor and/or on the wall, the latter also having an increased heat exchange surface; finally, it is also possible to feed a production plant of warm sanitary water 33, which is integrated with electricity or methane gas heating to further increase the temperature to the predefined value.

At last, on the lower, right side of Fig. 3, there is shown the fmal illustrative solution according to which the heating system is of a centralised type, that is, the carrier fluid feeds a condensation boiler or a heat pump of adequate capacity, 30, which increases the fluid temperature up to about 40°C, and successively feeds a centralised heating plant used to heat a plurality of civil power consumption units mentioned in the preceding paragraph.

In substance, in the first solution according to the invention (Fig. 3 on the right and center) all that portion of the local heating plant arranged on the right of the point denoted by 34 may be included in a single civil house, whereas in the second solution the network between 34' and 35 is a centralised network serving various low-temperature, power consumption units.

In the 1st solution and in the 2nd solution, the temperature of the carrier fluid may be increased even beyond 40°C provided that also in this case the fluid returns at a temperature of 27/30° to the thermoelectric plant, and provided the thermal exchange surfaces in the heating plant are adjusted correspondingly.

The advantages of the invention may be summarised as follows:

- less fuel consumption and consequent saving of money;
- reduction of the environmental pollution because of the reduction of emissions and the lower dispersion of heat in the surroundings (less air pollution and less thermal pollution);
- reduction of economic losses for the national electric energy transmission and delivery system, due to the fact that the plants are installed in the neighbourhood of the power consumption units;
- elimination of methods of delivering heat that are more polluting.

## Claims

1. Remote heating plant which uses the waste heat of a thermoelectric power plant equipped with a steam turbine, by recovering the heat provided by the steam which flows out of the low-pressure section of said steam turbine, said plant including an air condenser (8), and a heat exchanger (10) being provided in a second hydraulic circuit (11) arranged in parallel with a first hydraulic circuit (9) where the air condenser (8) is located, and wherein said heat exchanger (10) serves to remove heat from the steam which flows out of said low-pressure section and to transfer this heat to a carrier fluid for carrying out the remote heating; said carrier fluid, for instance water, being circulated in a third hydraulic circuit (19; 23, 24, 23', 24') in order to perform the remote heating of indoor spaces, **characterized in that** this remote heating is carried out in one of the following ways:

   - a distributed modality, according to which between said third hydraulic circuit (19; 23, 24; 23', 24') and a power consumption unit, there is provided a unit (30) to further increase the temperature of the water forming the carrier fluid, the said unit (30) being comprised within said power consumption unit;
   - a centralised modality, according to which between said third hydraulic circuit (19; 23, 24; 23', 24') and a plurality of power consumption units there is provided a unit (30) to further increase the temperature of the water forming the carrier fluid, and moreover, said unit (30) is provided at a centralised level and outside said power consumption units.

2. Remote heating plant according to claim 1, wherein said unit (30) for further increasing the temperature of the carrier fluid is a boiler or a heat pump.

**3.** Remote heating plant according to claim 1, wherein the heating in the distributed modality of operation also uses radiator tubes and/or panels (32) together with fan convectors with low round per minutes (rpm) values and fin assemblies (31) in an adequate number according to the temperatures involved.

**4.** Remote heating plant according to claim 1, wherein the heating in the centralised modality of operation also uses tubes and/or radiator panels (32) together with fan convectors with low rpm values and fin assemblies (31) in a number corresponding to the temperatures involved.

**5.** Remote heating plant according to claim 1, wherein the carrier fluid, or a further fluid which receives heat partly from the carrier fluid and partly from said temperature increasing unit (30), are utilised for the production of warm sanitary water (33) using heat integration with methane gas or electricity.

**Patentansprüche**

**1.** Fernheizanlage, die Abwärme eines thermoelektrischen Kraftwerks nutzt, das mit einer Dampfturbine ausgestattet ist, indem die von dem Dampf, der aus dem Niederdruckabschnitt der Dampfturbine ausströmt, gelieferte Wärme rückgewonnen wird, wobei die Anlage einen Luftkühler (8) umfasst und ein Wärmetauscher (10) in einem zweiten Flüssigkeitskreislauf (11) vorgesehen ist, der parallel zu einem ersten Flüssigkeitskreislauf (9) angeordnet ist, wo sich der Luftkühler (8) befindet, und wobei der Wärmetauscher (10) dazu dient, Wärme aus dem Dampf, der aus dem Niederdruckabschnitt strömt, zu entfernen und diese Wärme auf eine Trägerflüssigkeit zu übertragen, wodurch die Fernbeheizung durchgeführt wird; wobei die Trägerflüssigkeit, beispielsweise Wasser, in einem dritten Flüssigkeitskreislauf (19; 23, 24, 23', 24') zirkuliert wird und so die Fernbeheizung von Innenräumen erfolgt,
**dadurch gekennzeichnet, dass**
diese Fernbeheizung in einer der folgenden Weisen durchgeführt wird:

- in einer verteilten Ausführungsart, nach der zwischen dem dritten Flüssigkeitskreislauf (19; 23, 24; 23', 24') und einer Energieverbrauchseinheit eine Einheit (30) vorgesehen ist, um die Temperatur des Wassers, das die Trägerflüssigkeit bildet, weiter zu erhöhen, wobei die Einheit (30) in der Energieverbrauchseinheit enthalten ist;
- in einer zentralisierten Ausführungsart, nach der zwischen dem dritten Flüssigkeitskreislauf (19; 23, 24; 23', 24') und mehreren Energieverbrauchseinheiten eine Einheit (30) vorgesehen ist, um die Temperatur des Wassers, das die Trägerflüssigkeit bildet, weiter zu erhöhen, und wobei überdies die Einheit (30) auf einer zentralen Ebene und außerhalb der Energieverbrauchseinheiten vorgesehen ist.

**2.** Fernheizanlage nach Anspruch 1, wobei die Einheit (30) zur weiteren Erhöhung der Temperatur der Trägerflüssigkeit ein Boiler oder eine Wärmepumpe ist.

**3.** Fernheizanlage nach Anspruch 1, wobei das Beheizen in der verteilten Ausführungsart des Betriebs ebenso Kühlerröhrchen und/oder -platten (32) zusammen mit Gebläsekonvektoren mit niedrigen Drehzahlwerten (U/min) und Lamellenanordnungen (31) in gemäß den einbezogenen Temperaturen angemessener Anzahl nutzt.

**4.** Fernheizanlage nach Anspruch 1, wobei das Beheizen in der zentralisierten Ausführungsart des Betriebes ebenso Kühlerröhrchen und/oder -platten (32) zusammen mit Gebläsekonvektoren mit niedrigen Drehzahlwerten und Lamellenanordnungen (31) in gemäß den einbezogenen Temperaturen angemessener Anzahl nutzt.

**5.** Fernheizanlage nach Anspruch 1, wobei die Trägerflüssigkeit oder eine weitere Flüssigkeit, die Wärme teilweise aus der Trägerflüssigkeit und teilweise aus der die Temperatur erhöhenden Einheit (30) aufnimmt, zur Erzeugung von warmem Sanitärwasser (33) unter Verwendung von Wärmeintegration mit Methangas oder Elektrizität genutzt wird.

**Revendications**

**1.** Installation de chauffage à distance qui utilise la chaleur perdue d'une centrale thermoélectrique équipée d'une turbine à vapeur, en récupérant la chaleur fournie par la vapeur qui sort de la section basse pression de ladite turbine à vapeur, ladite installation comprenant un condenseur à air (8), et un échangeur de chaleur (10) étant disposé dans un deuxième circuit hydraulique (11) disposé parallèlement à un premier circuit hydraulique (9) où se trouve le condenseur à air (8), et étant précisé que l'échangeur de chaleur (10) sert à extraire la chaleur de la vapeur qui sort de la section basse pression, et à transférer cette chaleur dans un fluide porteur pour réaliser le chauffage à distance ; le fluide porteur, par exemple de l'eau, circulant dans un troisième circuit hydraulique (19 ; 23, 24, 23', 24') afin d'assurer le chauffage à distance dans des espaces intérieurs,

**caractérisée en ce que**

ce chauffage à distance est réalisé de l'une des manières suivantes :

- une modalité répartie, selon laquelle il est prévu, entre le troisième circuit hydraulique (19 ; 23, 24 ; 23', 24') et une unité de consommation de courant, une unité (30) pour augmenter encore la température de l'eau qui forme le fluide porteur, ladite unité (30) étant comprise dans l'unité de consommation d'énergie ;
- une modalité centralisée, selon laquelle il est prévu, entre le troisième circuit hydraulique (19 ; 23, 24 ; 23', 24') et plusieurs unités de consommation de courant, une unité (30) pour augmenter encore la température de l'eau qui forme le fluide porteur, et ladite unité (30) est en outre disposée à un niveau centralisé et à l'extérieur des unités de consommation d'énergie.

2. Installation de chauffage à distance selon la revendication 1, dans laquelle ladite unité (30) pour augmenter encore la température du fluide porteur est une chaudière ou une pompe à chaleur.

3. Installation de chauffage à distance selon la revendication 1, dans laquelle le chauffage dans la modalité de fonctionnement répartie utilise aussi des tubes et/ou des panneaux (32), avec des ventilo-convecteurs présentant des valeurs de tours par minute (tr/min) faibles et des ensembles à ailettes (31) en nombre approprié, suivant les températures impliquées.

4. Installation de chauffage à distance selon la revendication 1, dans laquelle le chauffage dans la modalité de fonctionnement centralisée utilise aussi des tubes et/ou des panneaux chauffants (32), avec des ventilo-convecteurs présentant des valeurs de tr/min faibles et des ensembles à ailettes (31) en nombre correspondant aux températures impliquées.

5. Installation de chauffage à distance selon la revendication 1, dans laquelle le fluide porteur ou un autre fluide qui reçoit la chaleur provenant en partie du fluide porteur et en partie de l'unité d'augmentation de température (30) sont utilisés pour la production d'eau sanitaire chaude (33) à l'aide d'une intégration de chaleur avec du gaz méthane ou de l'électricité.

Fig. 1

Fig. 2

Fig. 3

SOLUTION 1: DIRECT PLANT

SOLUTION 2: DISTRIBUTED PLANT

SOLUTION 3: CENTRALIZED PLANT

THERMOELECTRIC PLANT

HEAT EXCHANGER

REMOTE HEATING NETWORK

REMOTE HEATING NETWORK    LOW TEMPERATURE USER PLANTS

FAN-COIL 27-30°C

HEAT INTEGRATION WITH METHANE GAS OR ELECTRICITY

PRODUCTION OF WARM SANITARY WATER

PLANT LOCATED IN EACH HOUSE

TEMPERATURE INCREASING SYSTEM

FAN-COIL

REMOTE HEATING NETWORK    CENTRALIZED NETWORK    LOW-TEMPERATURE CIVIL-USE PLANTS

TEMPERATURE INCREASING SYSTEM

FAN-COIL

EP 1 766 196 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0155561 A1

**Non-patent literature cited in the description**

- *Legislative decree,* 16 March 1999

- *Law No. 239,* 23 August 2004